# NEW EUROPEAN PATENT SPECIFICATION

(11) **EP 3 564 423 B2**
(45) Date of publication and mention of the opposition decision: **12.07.2023**
(45) Mention of the grant of the patent: 12.08.2020
(21) Application number: 18170054.3
(22) Date of filing: 30.04.2018
(51) Int. Cl.: D04H 1/4209, B32B 7/022, B32B 19/02, B32B 19/06, E04B 1/74

(54) **PROCESS FOR THE MANUFACTURE OF MINERAL WOOL PANELS MADE OF TWO OR MORE LAYERS HAVING DIFFERENT DENSITIES**
VERFAHREN ZUR HERSTELLUNG VON MINERALWOLLEPANEELEN AUS ZWEI ODER MEHR SCHICHTEN MIT UNTERSCHIEDLICHER DICHTE
PROCÉDÉ POUR LA FABRICATION DE PANNEAUX DE LAINE MINÉRALE CONSTITUÉS DE DEUX COUCHES OU PLUS AYANT DES DENSITÉS DIFFÉRENTES

(43) Date of publication of application: 06.11.2019
(73) Proprietor: Betek Boya ve Kimya Sanayi A.S., 34852 Maltepe/Istanbul (TR)
(72) Inventor:
(74) Representative: Metten, Karl-Heinz

(56) References cited:
- EP-A1- 2 492 067
- EP-A2- 1 111 113
- WO-A1-03/014489
- WO-A1-03/054264
- WO-A1-2014/003645
- CA-A- 1 057 183
- DE-A1- 2 454 249
- JP-A- 2002 137 194
- JP-A- 2012 092 499
- US-A- 2 757 697
- US-A- 4 917 750
- YouTube, 27 April 2016 (2016-04-27), Retrieved from the Internet: URL:https://www.youtube.com/watch?v=U-EfwG jvD7s
- https://www.amazon.com/314666000-Honeycomb -Knife-Edge-8x0-032-Footage/dp/B071YDQP3Y, 18 April 2017

## Description

The present invention pertains to a process for the manufacture of mineral wool panels comprising two or more layers having different densities.

Panels made from mineral wool fibers have been used for insulation purposes for a long time. Mineral wool panels have the advantage of being essentially fireproof thereby offering good fire protection to buildings. Moreover, these panels have a good ecological balance. They are also open to diffusion and allow the transfer of moisture thereby preventing mildew. Thermal and acoustic insulation characteristics of panels made from mineral wool fibers are also rather satisfactory. For these reasons mineral wool panels are frequently used for insulating facades and roofs of both new constructions and old buildings.

Mineral wool insulation panels are regularly prepared by a continuous process starting from the production of mineral wool fibers from silicates and providing at the end of this process packaged mineral wool panels ready for shipment. Such continuous process relies on a serious of intertwined process steps, and is, thus, vulnerable to the malfunctioning of individual steps having the consequence that the entire process will be severely hampered or may even be blocked. This holds in particular true for the preparation of mineral wool panels made of two or more layers having different densities. It is a characteristic feature of the production of these mineral wool panels that a pre-compressed mineral wool web has to be split into two sub-webs at least one of which is to be compacted prior to rejoining both sub-webs to form a mineral wool panel. This sequence of pre-compression, splitting and rejoining the split sub-webs has to be highly synchronized and is rather sensitive to any interruptions along the continuous process. Such interruptions may also lead to insulating panels of lesser quality which may be more prone to for example the delamination.

The manufacture of mineral wool insulation panels made of two or more layers having different densities is for example described in WO 2007/095948 A1, EP 1 180 182 B1, EP 1 989 368 B1, EP 1 456 451 B1, EP 1 456 444 B2, EP 1 525 358 B1, EP 2931955 B1, EP 1 977 054 A1, EP 1 444 408 B1 and EP 1 989 362 B1. In general, a consolidated web is split along a horizontal plane into two sub-webs and the sub-web intended to form the layer which is to have higher density is subjected to height compression in order to increase its density. Subsequently the two sub-webs are rejoined. However, with the known manufacturing protocols no special emphasis is put on the splitting step even though it is a pre-compressed fibrous mineral wool mat which has to be continuously cut through its entire width. Usually, for the splitting/cutting operation a circulating saw or band saw, respectively, is used. It has been found that fibrous material loosened by said cutting operation can under certain circumstances accumulate which may then lead to blockage of the cutting tool having the consequence that the process must be stopped in order to allow for repair or maintenance.

JP 2012 092499 is about a soundproof panel and a soundproof wall having an enhanced soundproof effect for an entire sound range including a low frequency range from 100 Hz to 300 Hz. This shall be accomplished by a soundproof panel comprising a saw-tooth component formed of a rigid material with a saw-tooth-shaped edge formed from a combination of vertical sides extending in vertical direction and oblique sides tilting from the vertical direction. The soundproof panel of JP 2012 092499 shall further comprise at least one sound absorption component which is arranged at least through a path of sound waves propagating between the neighboring teeth of the saw-tooth component.

WO 03/054264 addresses a continuous method of forming a bonded mineral fiber batt comprising an upper layer intermeshed with a lower layer having a lower density than the upper layer and in which each layer is a bonded non-woven mineral fiber network. Said method shall comprise providing a continuous mineral fiber web which contains binder, separating the web depthwise into upper and lower sub-webs, subjecting each sub-web independently to treatments selected from lengthwise compression, lengthwise stretching, and thickness compression, rejoining the sub-webs whereby the upper sub-web provides the upper layer of the batt, and curing the binder. Said method shall be characterized in that both sub-webs are subjected to lengthwise compression and the upper sub-web is subjected to thickness compression before, during or after the lengthwise compression such that the upper layer of the batt has higher density than the lower layer. With this method a rather good product quality shall be obtained by using a comparably short apparatus production line. For separating the web into upper and lower sub-webs use of a knife is disclosed.

EP 2 492 067 refers to a method for providing at least one line of weakness in a mineral wool blanket using a device comprising a conveying means for continuously transporting a mineral wool blanket in a conveying direction, a cutting means arranged above the conveying means, wherein the cutting means is arranged and controlled to perform a movement in the direction of thickness of the mineral wool blanket, and wherein the cutting means comprises an elongate cutting blade which acts in guillotine-type manner and which extends perpendicularly to the conveying direction. The cutting blade shall furthermore consist of a series of cutting portions and recessed portions between the cutting portions. By use of this method at least one line of weakness can be generated in a fibrous mineral wool blanket in-line while only requiring a short processing time and maintaining a high product quality of the mineral wool product.

WO 03/014489 is about a process for the preparation, cutting, and sorting of lamellas into a band of insulation filling. According to its claim 1 this process shall comprise the transfer of insulation filling slabs to a production line for manufacturing of light building panels, cutting of said insulation filling slabs into lamellas, separation of stacks of said lamellas, accumulation of said lamellas, delivery of said lamellas, formation of repeatability of frontal coupling contour of said lamellas with simultaneous control of pressure between adjacent lamellas undergoing frontal coupling in lengthwise direction, and transport of said lamellas between steps in said process. The slabs obtained shall no longer require gluing thereby improving fire resistance and anti-flammability characteristics.

Thus, there has been a need to provide an improved process for the in particular manufacture of mineral wool panels. Accordingly, it has been an object of the present invention to overcome the disadvantages of the prior art processes for the manufacture of mineral wool panels made of two or more layers having different densities. It has in particular been an object of the present invention to provide processes for the manufacture of mineral wool panels made of two or more layers having different densities for which the number and duration of repair or maintenance operations per time interval can be significantly reduced.

Therefore, with the present invention an, in particular, continuous process for the manufacture of mineral wool panels comprising two or more layers having different densities has been found comprising the steps:
a) providing a mineral wool panel production line comprising means for preparing a pre-compressed mat comprising mineral wool fibers, a cutting station for splitting the pre-compressed mat into a first and a second sub-web, transporting means arranged and adapted to transfer the pre-compressed mat to the cutting station, and a curing station,
b) providing a pre-compressed mat comprising mineral wool fibers and at least one curable binder with said means for preparing a pre-compressed mat, said mat having a first surface, in particular lower surface with respect to the transporting means, and an opposite, second surface, in particular upper surface with respect to the transporting means, and a first side edge and an opposing second side edge, and a height dimension between the first, in particular lower, and the second, in particular upper, surface and a width dimension between the first and second side edge,
c) transporting said pre-compressed mat to the cutting station by use of the transporting means, wherein the cutting station comprises at least one band saw with a cutting blade having a tooth profile, wherein the cutting blade is located or is arranged and adapted to be located between the first, in particular lower, surface and the second, in particular upper, surface of the mat and is also arranged and adapted to split the pre-compressed mat into a first, in particular upper, sub-web and a second, in particular lower, sub-web by moving the cutting blade in a sawing direction relative to the pre-compressed mat,
d) splitting the pre-compressed mat into a first, in particular upper, sub-web and a second, in particular lower, sub-web by use of the tooth profile of the moving cutting blade,
e) subjecting the first, in particular upper, sub-web and/or the second, in particular lower, sub-web, in particular the upper sub-web, more in particular the upper sub-web and not the lower sub-web, to at least one compression step in height and/or width dimension, in particular in height dimension, more in particular in height dimension and not in width dimension, so that the upper and the lower sub-web result in deviating densities, in particular the first, in particular upper sub-web, has a higher density than the second, in particular lower sub-web,
f) joining the first, in particular upper, sub-web and the second, in particular lower, sub-web and
g) subjecting the combined first, in particular upper, sub-web and the second, in particular lower, sub-web to a curing step at the curing station so that the first and second sub-webs are bonded to each other along their adjoining surfaces, and
h) isolating mineral wool panels comprising two or more layers having different densities from the cured combined first, in particular upper, and second, in particular lower, sub-webs,
wherein the tooth profile of the cutting blade comprises a multitude of teeth having, relative to the sawing direction, a frontward directed edge and a backward directed edge essentially each with a heel and a toe part,
wherein the angle α (alpha) between the straight line running through the heel part and the toe part of the frontward directed edge of a tooth and the straight line running through said heel part of the frontward directed edge and the heel part of the backward directed edge of said tooth is smaller than the angle β (beta) between the straight line running through the heel part and the toe part of the backward directed edge of said tooth and the straight line running through the heel part of the backward directed edge and the heel part of the frontward directed edge of said tooth, wherein the frontward directed edges have a convex shape and/or the backward directed edges have a concave shape.

Put in other words, in a suitable embodiment the teeth, in particular the majority of teeth and more in particular essentially all teeth of the teeth profile of the cutting blade have a pointed tip which is pointing backwards - relative to moving direction/sawing direction of the cutting blade in the splitting step.

With the process of the present invention the cutting blade is operated in a manner that the frontward directed edges of the cutting blade are facing in the moving, i.e. forward direction of the cutting blade, that is the frontward directed edges of the cutting blade are regularly in first contact with the material to be split or cut. Accordingly, with the process of the present invention the cutting blade is moved in the direction of the frontward directed edges during the splitting process.

According to a suitable embodiment of the process of the present invention the tooth profile comprises or consists of a rip tooth profile.

The thickness of the cutting blade used with the process of the present invention usually is in the range from 0,5 mm to 4 mm, in particular in the range from 1 mm to 3 mm.

The length of the frontward directed edges of the cutting blades used with the process of the present invention can in one embodiment be, for example, in the range from 2 mm to 10 mm, in particular in the range from 3 to 6 mm, and/or the length of the backward directed edges of these cutting blades can in one embodiment be, for example, in the range from 1 mm to 8 mm, in particular in the range from 2 to 5 mm.

According to a preferred embodiment for the majority of teeth of the multitude of teeth of the tooth profile of the cutting blade used with the process of the present invention, in particular for essentially all teeth of the multitude of teeth, the angle α is smaller than the angle β. In this manner the surprising effects of the present invention as outlined above can even be more reliably obtained.

In one embodiment of the invention the frontward directed edges can have a convex shape while at the same time the backward directed edges of the corresponding tooth either have a straight line geometry or a concave shape. The backward directed edges of the corresponding tooth can also have a convex shape.

The heel part of the frontward directed edges and the heel part of the backward directed edges can usually be determined with great accuracy. At these heel parts the respective frontward directed edge and the respective backward directed edge are terminated, for example, either by an adjoining backward directed edge or frontward directed edge, respectively, of an adjacent tooth of the cutting blade for by a baseline section between adjacent teeth. Such baseline section is in suitable embodiments essentially co-linear with the moving direction of the cutting blade relative to the mineral wool mat.

Furthermore, in rather suitable embodiments of the process of the present invention the dimension between the toe and heel part of the frontward directed edge of a tooth, in particular of essentially all teeth of the multitude of teeth, is longer than the dimension between the toe and heel part of the backward directed edge of said tooth. It is preferred to implement the aforementioned feature with essentially all teeth of the multitude of teeth of the tooth profile of the cutting blade to be used with the process of the present invention.

Those cutting blades have been found to be particularly advantageous with the process of the present invention in which the heel part of the frontward directed edge of a tooth of the multitude of teeth is overlapping or coinciding with the heel part of the backward directed edge of the adjacent tooth. In addition or alternatively, in particular in addition, the heel part of the backward directed edge of said tooth is overlapping with the heel part of the frontward directed edge of the opposite adjacent tooth. With a multitude of embodiments it has also been found to provide satisfying results when the toe part of the frontward directed edge of a tooth of the multitude of teeth is overlapping with the toe part of the backward directed edge of said tooth.

According to another preferred embodiment of the process of the present invention the heel parts of the frontward directed edges of the teeth of the multitude of teeth are lying on an essentially straight baseline. Alternatively, the heel parts of the backward directed edges of the teeth of the multitude of teeth can also lie on an essentially straight baseline. Moreover, with rather suitable embodiments both the heel parts of the frontward directed edges and the heel parts of the backward directed edges of the teeth of the multitude of teeth are lying on an essentially straight baseline. Said baseline is in general a hypothetical line drawn on the cutting blades used with the process of the present invention.

Those embodiments of the process of the present invention are particularly preferred in which cutting blades are used having a tooth profile in which the angle α is in the range from 10 to 45°, in particular in the range from 25 to 40°, and/or, in particular and, wherein the angle β is in the range from 60 to 155°, in particular in the range from 90 to 135°.

The mineral fibers to be used in the production of the insulating panels according to the process of the present invention comprise for example glass fibers, ceramic fibers, basalt fibers, slag wool fibers and/or stone wool fibers. That is, in general any type of man-made vitreous fibers can be used. Preferred mineral fibers are stone wool fibers, more preferred stone wool fibers produced by use of the spinning method.

Usually, the mineral fibers to be used in the production of insulating panels according to the process of the present invention, in particular the stone wool fibers, have an average diameter in the range of 1 to 20 µm, in particular 2 to 10 µm and more in particular 3 to 5 µm, and/or an average length in the range of 0.5 to 10 mm, in particular in the range of 1 to 6 mm and more particular in the range of 2 to 5 mm.

The thickness of the insulating panels obtained according to the process of the present invention can vary in broad ranges, the same applies to the thickness of individual sub- webs. Usually, in the final product, that is the insulating panel leaving the curing station the average thickness is in the range from 30 to 300 mm, preferably in the range from 30 to 190 mm, while the average thickness of the sub-web having the higher density lies in the range from 15 to 100 mm, preferably in the range from 15 to 40 mm, and that of the sub-web having the lower density lies in the range from 15 to 200 mm, preferably in the range from 15 to 150 mm.

Moreover, in rather suitable embodiments with the process of the present invention insulating panels are produced in which the top sub-web having the higher density, after the curing process has taken place, has an average density in the range from 60 to 200 kg/m³, preferably in the range from 90 to 150 kg/m³, and the lower sub-web having the lower density has an average density in the range from 50 to 130 kg/m³, preferably in the range from 80 to 130 kg/m³.

In rather suitable embodiments of the present invention the pre-compressed mat comprising mineral wool fibers is subjected to a so-called crimping operation prior to the splitting step. Here, the pre-compressed mat is subjected to a length and height compression or stretching in a crimping unit before splitting. Such crimping unit usually has upper and lower rollers or belts which can be speed adjusted separately. By for example using upper and lower rollers exhibiting a difference in speed the primary main fiber orientation of the the pre-compressed mat is changed.

With preferred embodiments of the process of the present invention the second, in particular lower, sub-web is not subjected to lengthwise compression, lengthwise stretching and/or thickness compression, in particular not subjected to lengthwise compression, lengthwise stretching and thickness compression. Alternatively or in addition the first, in particular upper, and the second, in particular lower, sub-webs are not subjected to the same lengthwise compression.

According to another embodiment of the process of the present invention the pre-compressed mat can be subjected to a lengthwise compression prior to the splitting step.

Moreover, those embodiments of the process of the present invention have been found to be advantageous in which the second, in particular lower, sub-web after the splitting step and prior to being combined with the first, in particular upper, sub-web is not subjected to any treatment step.

Further embodiments of the process of the present invention provide that the first, in particular upper, sub-web is subjected to at least one thickness compression step prior to being combined with the second, in particular lower, sub-web. Alternatively or in addition it is also advantageous that the first, in particular upper, sub-web is not subjected to a lengthwise compression being greater than is required to compensate for the thickness compression. Moreover, in some embodiments of the process of the present invention it is provided that the first, in particular upper, sub-web is not subjected to a lengthwise stretching prior to being combined with the second, in particular lower, sub-web.

Usually, the pre-compressed mat can be formed from at least one mineral wool web which is placed in layers on top of each other, in particular by use of a pendulum tool, thereby forming a mat of mineral wool which is subjected to the pre-compression step in a pre-compression unit. Alternatively or in addition the pre-compressed mat can be subjected to at least one length compression step and/or at least one height compression step prior to the splitting step.

According to another rather suitable embodiment, the combined first and second sub-webs, in particular upper and lower sub-webs, are subjected to at least one compression step, in particular while being subjected to a heat curing step in the curing unit.

Those embodiments of the process of the present invention are particularly preferred in which the first sub-web, in particular upper sub-web, is compressed by being transferred through a compression unit comprising a first rotatable or actively rotating roller, in particular a set of first rotatable or actively rotating rollers, on the first, in particular upper, side of the first, in particular upper, sub-web and a second rotatable or actively rotating roller, in particular a set of second rotatable or actively rotating rollers, on the opposite second, in particular lower side, of the first, in particular upper, sub-web wherein the first and second roller are aligned to each other, essentially vertically aligned to each other, or wherein at least one roller, in particular all rollers, of the set of first rollers and at least one roller, in particular all rollers, of the set of second rollers are aligned to each other in a pairwise manner, in particular vertically aligned to each other in a pairwise manner.

With the aforementioned embodiments of the process of the present invention it can preferably be provided that the first actively rotating roller and the second actively rotating roller are rotating with essentially the same velocity or that at least one actively rotating roller of the set of first rollers and at least one actively rotating roller of the set of second rollers, which are aligned to each other, in particular essentially vertically aligned to each other, are rotating with essentially the same velocity or that the set of first rollers comprises a multitude of actively rotating rollers and the set of second rollers comprises a multitude of actively rotating rollers wherein with at least one pair, in particular with all pairs, of the aligned, in particular essentially vertically aligned, actively rotating roller from the first and second set of rollers these rollers are rotating with the same velocity. In this manner the expansion of the web due to the vertical compression can be compensated.

With the preparation of insulating panels according to the present invention in general suitable binder materials such as organic binding agents known in the art can be employed. Preferred organic binders comprise heat curable binders such as phenol, polyester, epoxy, polyvinyl acetate, polyvinyl alcohol, acrylic and/or acid anhydride/amine based binders. Phenol based binders such as phenol formaldehyde, urea and/or melamine resins, acid anhydride/amine resins, and furan resins are particularly preferred. In general, the binder material is in most cases added to the mineral fibers shortly after the preparation of these fibers is completed. It is present as a non-cured binder which is subjected to curing only at the end of the process of the present invention in the curing station. The binder content can be in the range from approximately 0.7 to 7 wt.-%, in some other cases in the range from 1 to 4,5 wt.-%, based on the weight of the material forming the insulating panel.

Mineral wool panels comprising two or more layers having different densities can be obtained according to the process of the present invention. These insulating panels exhibit a decreased delamination tendency. Without being bound by theory it is presently believed that with the process of the present invention rougher splitting surfaces of the sub-webs are obtained which upon curing and optionally applying pressure provide a rather strong bonding between the formerly split sub-webs.

With the process of the present invention it has surprisingly been found that at least one marker, in particular a ribbon, can be reliably and easily provided by joining to the upper sub-web, in particular to the upper surface of said upper sub-web, during the compression step. The marker in particular comprises or consists of a fiber glass tape, fiber glass cloth and/or an RFID device. In particularly preferred embodiments and RFID device is embedded in a fiber glass tape or a fiber glass cloth.

With the process of the present invention it has also surprisingly been found that the design of the teeth of the cutting blade combined with the direction into which said cutting blade is moved in order to split the pre-compressed mineral wool mat greatly decreases the risk of blockage. Furthermore, with the process of the present invention the generation of dust particles such as fibrous material originating from the pre-compressed mineral wool mat can be greatly reduced thereby also providing a safer working environment.

The invention is further described by the following examples given in the figures, yet without being restricted thereto.
- Fig. 1: depicts a schematic perspective view of a mineral wool mat;
- Fig. 2: depicts a schematic side view of a cutting blade not according to the invention;
- Fig. 3: depicts a schematic side view of a section of a first embodiment of a cutting blade;
- Fig. 4: depicts a schematic side view of a section of a second embodiment of a cutting blade;
- Fig. 5: depicts a schematic side view of a cutting blade not according to the invention;
- Fig. 6: depicts a schematic side view of a section of a third embodiment of a cutting blade.

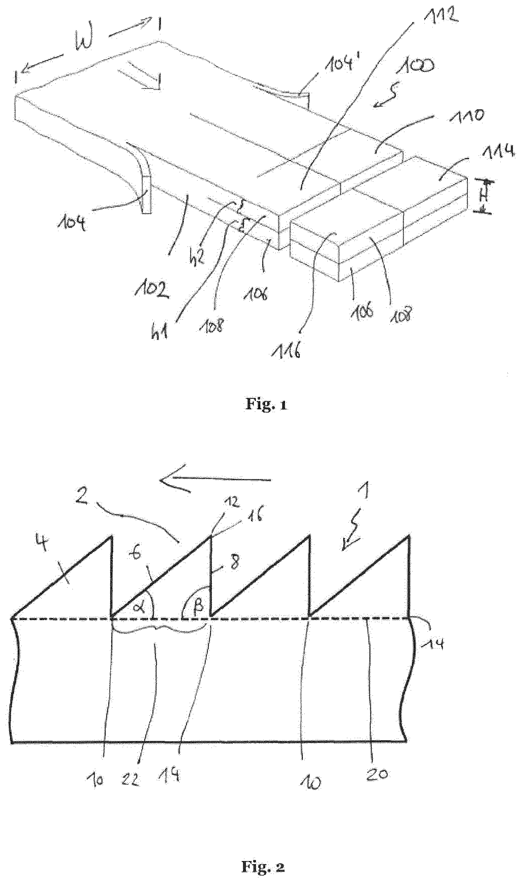

Fig. 1 shows a perspective view of a schematic representation of a mineral wool mat 100. Fig. 1 shall serve the purpose to visualize different cutting and splitting modes which can generally be used in the process of preparing compressed mineral wool insulation panels.

According to a first cutting operation, which is not part of the present invention, the side edges of a compressed and cured mineral wool mat 100 are trimmed by a first cutting device (not shown) to yield flat side edges 102 and narrow mineral wool material strips 104, 104' which can be discarded.

According to a second cutting operation, which is also not part of the present invention, the compressed and cured mineral wool mat, that is after the final curing process has taken place, can be cut along its entire width W so that the total height H is divided into two (or more) height sections h1 and h2 furnishing individual sub-webs. Here, the cutting must take place after the final curing process. In this manner the cured product is cut into two (or more) layers of products, each thinner than the thickness of the total web, and each having essentially the same density throughout the board.

The compressed and cured mineral wool mat 100 can also be longitudinally cut into a pair of mineral wool mats 110 and 112 by a third cutting operation/device (not shown), which is also not part of the present invention. These compressed and cured mineral wool mats 110 and 112 can then be transversely cut by a fourth cutting operation/device (not shown) into individual mineral wool insulation panels 114 to 116, which, again, is not part of the present invention.

Different from the above-described cutting modes of the compressed and cured mineral wool mat the splitting process according to the present invention takes place before the final curing process has taken place. Splitting is done along the entire width W of the pre-compressed mat so that the total height H of the pre-compressed mat is divided into two (or more) height sections h1 and h2. In this manner a lower sub-web 106 and an upper sub-web 108 are created which are individually treated/compressed prior to being recombined yielding after curing a final product comprising two (or more) layers having different densities.

Fig. 2 shows a section of a cutting blade 1 in schematic side view. Cutting blade 1 is used for the splitting of the pre-compressed mineral wool mat into an upper and a lower sub-web. The cutting blade 1 is part of a circulating saw/band saw. The movement of the cutting blade 1 is indicated by the arrow. The cutting blade 1 comprises a tooth profile 2 comprising a multitude of consecutive cutting teeth 4. Each tooth 4 has a frontward directed edge 6 and a backward directed edge 8 with respect to the movement of the cutting blade 1. In the embodiment depicted in Fig. 2 both the frontward directed edge 6 and the backward directed edge 8 have the form of a straight line. The frontward directed edge 6 has a heel part 10 and a toe part 12. Similarly, the backward directed edge 10 has as well a heel part 14 and a toe part 16. In case of the embodiment of the cutting blade 1 as depicted in Fig. 2 the toe part 12 of the frontward directed edge 6 and the toe part 16 of the backward directed edge 8 of the cutting to 4 are located at an essentially identical position. With the cutting blade according to the embodiment depicted in Fig. 2 all heel parts 10, 14 of the frontward directed edges and of the backward directed edges are lying on a (hypothetical) straight baseline 20. In general, a tooth 4 of the tooth profile of cutting blade 1 can be defined by the frontward directed edge 6, the backward directed edge 8 and the (hypothetical) straight line 22 between the heel part 10 of the frontward directed edge 6 and the heel part 14 of the backward directed edge 8.

The angle α between the frontward directed edge 6 of the tooth 4 and the straight line 22 running through said heel part 10 of the frontward directed edge 6 and the heel part 14 of the backward directed edge 8 of said tooth 4 is smaller than the angle β between the backward directed edge 8 of said tooth 4 and the straight line 22 running through the heel part 14 of the backward directed edge 8 and the heel part 10 of the frontward directed edge 6 of said tooth. While the angle α depicted with the embodiment according to Fig. 2 is about 45°, the angle β is about 90°.

With the process of the present invention it is the frontward directed edges 6 which interact with the pre-compressed mineral wool mat and which are causing the splitting action. Surprisingly, by using a rather flat cutting edge the splitting of the pre-compressed mineral wool mat can nevertheless be reliably accomplished in a continuous process. Even more surprising, with the process of the present invention making use of the above described movement of a specific cutting blade design the amount of dust as well as of fibrous remnants can be significantly reduced. In addition the continuous process of the preparation of mineral wool insulation panels causes much less interruptions due to blockage of the circulating saw/band saw. And, maintenance intervals it can be also significantly extended as well.

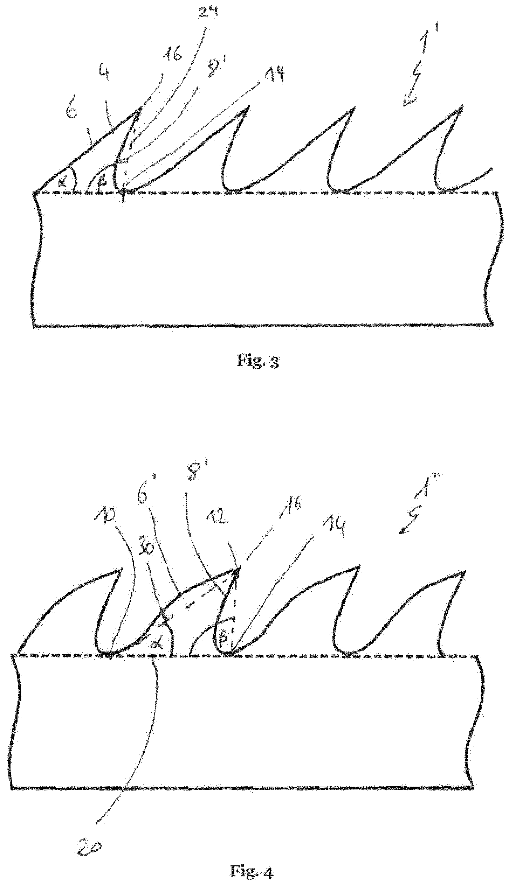

The section of the cutting blade 1' depicted in Fig. 3 differs from the cutting blade 1 of Fig. 2 in that the backward directed edge 8' has a concave shape, that is the backward directed edge 8' is no longer lying on the straight line (see dotted line 24 in Fig. 3) between the toe part 16 and the heel part 14 of said backward directed edge 8'. The angle β is thus determined between the frontward directed edge 6 and the dotted line 24. In Fig. 4 another embodiment of a cutting blade 1" to be used with the process of the present invention is shown. Different from the embodiment depicted in Fig. 3 the frontward directed edge 6' of the teeth of the tooth profile of cutting blade 1" has a convex shape. Accordingly, the angle α is determined by use of dotted line 30 and baseline 20.

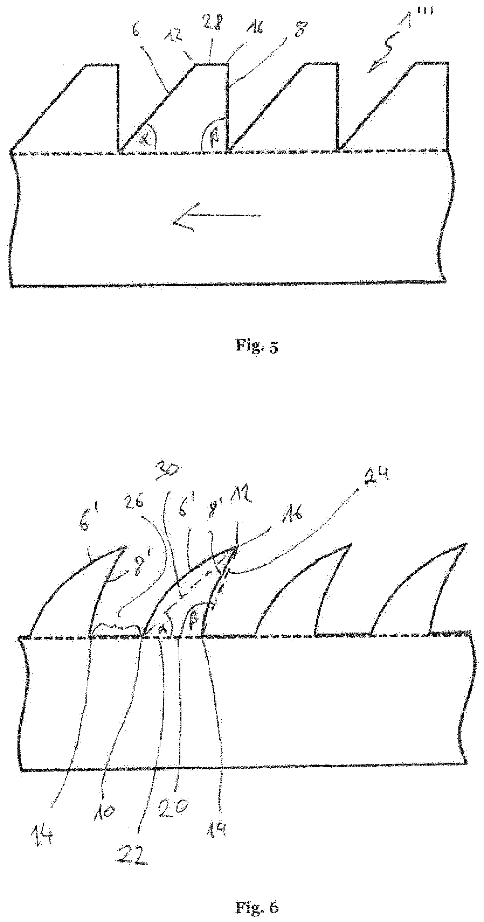

In Fig. 5 a section of a cutting blade 1'" is shown. The cutting blade 1'" of Fig. 5 differs from the cutting blade 1 shown in Fig. 1 in that the toe part 12 of the frontward directed edge 6 and the toe part 16 of the backward directed edge 8 no longer coincide but are separated by a distance 28 which in the embodiment of Fig. 5 takes on a straight line. Again, the angle α is smaller than the angle β.

In figure 6 a cutting blade 1 is shown which differs from the cutting blade embodiment 1" depicted in Fig. 4 in that the heel part 10 of the frontward directed edge 6 of embodiment 1"" no longer coincides with the heel part 14 of the backward directed edge 8' of the adjacent tooth. Accordingly, there is a distance 26 between said heel parts 10, 14, which in the embodiment shown in Fig. 6 is essentially lying on the baseline 20. Again, similar to Fig. 4 the angle α is significantly smaller than the angle β. The angle α has to be measured between the dotted line 30 and the straight line running between the heel parts 10 and 14 of tooth 4, while the angle β has to be determined between the straight line (see dotted line 24) running through the toe part 16 and the heel part 14 of the backward directed edge 8' and the straight line 22 running through the heel part 14 of the backward directed edge 8' and the heel part 10 of the frontward directed edge 6 of said tooth 4.

With all cutting blade embodiments shown in Figs. 2 to 6, when used with the process of the present invention, that is by using a cutting blade movement as indicated by the respective arrows in these drawings, a much improved splitting result in terms of process efficiency, process costs and maintenance work is obtained. Interestingly, it has also been found that when using the process according to the present invention delamination of the recombined sub-webs requires greater forces than with mineral wool panels made of two or more layers having different densities obtained according to processes of the state of the art.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description, the figures as well as the claims could be essential alone or in every combination for the realization of the invention in its different embodiments.

## Claims

1. An, in particular continuous, process for the manufacture of mineral wool panels comprising two or more layers having different densities comprising the steps:
a) providing a mineral wool panel production line comprising means for preparing a pre-compressed mat comprising mineral wool fibers, a cutting station for splitting the pre-compressed mat into a first and a second sub-web, transporting means arranged and adapted to transfer the pre-compressed mat to the cutting station, and a curing station,
b) providing a pre-compressed mat comprising mineral wool fibers and at least one curable binder with said means for preparing a pre-compressed mat, said mat having a first surface, in particular lower surface with respect to the transporting means, and an opposite, second surface, in particular upper surface with respect to the transporting means, and a first side edge and an opposing second side edge, and a height dimension between the first, in particular lower, and the second, in particular upper, surface and a width dimension between the first and second side edge,
c) transporting said pre-compressed mat to the cutting station by use of the transporting means, wherein the cutting station comprises at least one band saw with a cutting blade having a tooth profile,
wherein the cutting blade is located or is arranged and adapted to be located between the first, in particular lower, surface and the second, in particular upper, surface of the mat and is also arranged and adapted to split the pre-compressed mat into a first, in particular upper, sub-web and a second, in particular lower, sub-web by moving the cutting blade in a sawing direction relative to the pre-compressed mat,
d) splitting the pre-compressed mat into a first, in particular upper, sub-web and a second, in particular lower, sub-web by use of the tooth profile of the moving cutting blade,
e) subjecting the first, in particular upper, sub-web and/or the second, in particular lower, sub-web, in particular the upper sub-web, more in particular the upper sub-web and not the lower sub-web, to at least on compression step in height and/or width dimension, in particular in height dimension, more in particular in height dimension and not in width dimension, so that the upper and the lower sub-web result in deviating densities, in particular the first, in particular upper sub-web, has a higher density than the second, in particular lower sub-web,
f) joining the first, in particular upper, sub-web and the second, in particular lower, sub-web and
g) subjecting the combined first, in particular upper, sub-web and the second, in particular lower, sub-web to a curing step at the curing station so that the first and second sub-webs are bonded to each other along their adjoining surfaces, and
h) isolating mineral wool panels comprising two or more layers having different densities from the cured combined first, in particular upper, and second, in particular lower, sub-webs,
wherein
the tooth profile of the cutting blade comprises a multitude of teeth having, relative to the sawing direction, a frontward directed edge and a backward directed edge essentially each with a heel and a toe part,
wherein the angle α between the straight line running through the heel part and the toe part of the frontward directed edge of a tooth and the straight line running through said heel part of the frontward directed edge and the heel part of the backward directed edge of said tooth is smaller than the angle β between the straight line running through the heel part and the toe part of the backward directed edge of said tooth and the straight line running through the heel part of the backward directed edge and the heel part of the frontward directed edge of said tooth,
wherein the frontward directed edges have a convex shape and/or the backward directed edges have a concave shape.

2. The process according to claim 1, wherein
the tooth profile comprises or consists of a rip tooth profile and/or wherein the angle α is smaller than the angle β for the majority of teeth of the multitude of teeth, in particular for essentially all teeth of the multitude of teeth.

3. The process according to claim 1 or 2, wherein
the angle α is in the range from 10 to 55°, in particular in the range from 25 to 45°, and/or wherein the angle β is in the range from 60 to 155°, in particular in the range from 90 to 135°.

4. The process according to any of the preceding claims, wherein
the dimension between the toe and heel part of the frontward directed edge of a tooth, in particular of essentially all teeth of the multitude of teeth, is longer than between the toe and heel part of the backward directed edge of said tooth.

5. The process according to any of the preceding claims, wherein
the heel parts of the frontward directed edges of the teeth of the multitude of teeth are lying on an essentially straight baseline and/or wherein
the heel parts of the backward directed edges of the teeth of the multitude of teeth are lying on an essentially straight baseline and/or wherein
the heel parts of the frontward and the backward directed edges of the teeth of the multitude of teeth are lying on an essentially straight baseline,
and/or wherein
the heel part of the frontward directed edge of a tooth of the multitude of teeth is overlapping with the heel part of the backward directed edge of the adjacent tooth and/or wherein
the heel part of the backward directed edge of said tooth is overlapping with the heel part of the frontward directed edge of the adjacent tooth and/or wherein
the toe part of the frontward directed edge of a tooth of the multitude of teeth is overlapping with the toe part of the backward directed edge of said tooth.

6. The process according to any of the preceding claims, wherein
the second, in particular lower, sub-web, after the splitting has taken place, is not subjected to lengthwise compression, lengthwise stretching and/or thickness compression, in particular not subjected to lengthwise compression, lengthwise stretching and thickness compression, and/or wherein
the first, in particular upper, and the second, in particular lower, sub-webs are not subjected to the same lengthwise compression,
and/or wherein
the pre-compressed mat is subjected to a lengthwise compression and/to a process step in which the pre-compressed mat is treated so that at least some, in particular a majority of mineral wool fibers undergo a reorientation prior to the splitting step.

7. The process according to any of the preceding claims, wherein
the second, in particular lower, sub-web after the splitting step and prior to being combined with the first, in particular upper, sub-web is not subjected to any treatment step.

8. The process according to any of the preceding claims, wherein
the first, in particular upper, sub-web is subjected to at least one thickness compression step prior to being combined with the second, in particular lower, sub-web, and/or wherein
the first, in particular upper, sub-web is not subjected to a lengthwise compression being greater than is required to compensate for the thickness compression and/or wherein the first, in particular upper, sub-web is not subjected to a lengthwise stretching prior to being combined with the second, in particular lower, sub-web.

9. The process according to any of the preceding claims, wherein
the pre-compressed mat is formed from at least one mineral wool web which is placed in layers on top of each other, in particular by use of a pendulum tool, thereby forming a mat of mineral wool which is subjected to the pre-compression step in a pre-compression unit, and/or wherein
the pre-compressed mat is subjected to at least one length compression step and/or at least one height compression step prior to the splitting step.

10. The process according to any of the preceding claims, wherein
the pre-compressed mat is subjected to at least one crimping step prior to splitting step d).

11. The process according to any of the preceding claims, wherein
the combined first and second sub-webs, in particular upper and lower sub-webs, are subjected to at least one compression step, in particular while being subjected to a heat curing step in the curing unit.

12. The process according to claim 11, wherein
the first sub-web, in particular upper sub-web, is compressed by being transferred through a compression unit comprising a first rotatable or actively rotating roller, in particular a set of first rotatable or actively rotating rollers, on the first, in particular upper, side of the first, in particular upper, sub-web and a second rotatable or actively rotating roller, in particular a set of second rotatable or actively rotating rollers, on the opposite second, in particular lower side, of the first, in particular upper, sub-web wherein the first and second roller are aligned to each other, essentially vertically aligned to each other, or wherein at least one roller, in particular all rollers, of the set of first rollers and at least one roller, in particular all rollers, of the set of second rollers are aligned to each other in a pairwise manner, in particular vertically aligned to each other in a pairwise manner.

13. The process according to claim 12, wherein
the first actively rotating roller and the second actively rotating roller are rotating with essentially the same velocity or wherein
at least one actively rotating roller of the set of first rollers and at least one actively rotating roller of the set of second rollers, which are aligned to each other, in particular essentially vertically aligned to each other, are rotating with essentially the same velocity or wherein
the set of first rollers comprises a multitude of actively rotating rollers and the set of second rollers comprises a multitude of actively rotating rollers wherein with at least one pair, in particular with all pairs, of the aligned, in particular essentially vertically aligned, actively rotating roller from the first and second set of rollers these rollers are rotating with the same velocity.

14. The process according to any of the preceding claims, in particular claims 11 to 13,
wherein
at least one marker, in particular a ribbon, is provided which is joined to the upper sub-web, in particular to the upper surface of said upper sub-web, during the compression step, wherein the marker in particular comprises or consists of a fiber glass tape, fiber glass cloth or an RFID device or a fiber glass tape or fiber glass cloth comprising an RFID device.

## Patentansprüche

1. Ein, insbesondere kontinuierliches, Verfahren zur Herstellung von Mineralwollplatten, die zwei oder mehr Schichten mit unterschiedlichen Dichten umfassen, umfassend die Schritte:
a) Bereitstellen einer Produktionslinie für Mineralwollplatten, umfassend Mittel zum Vorbereiten einer vorkomprimierten Matte, umfassend Mineralwollfasern, eine Schneidestation zum Aufteilen der vorkomprimierten Matte in eine erste und eine zweite Teilbahn, Transportmittel, die so angeordnet und angepasst sind, dass sie die vorkomprimierte Matte zur Schneidestation überführen, und eine Aushärtestation,
b) Bereitstellen einer vorkomprimierten Matte, umfassend Mineralwollfasern und mindestens ein härtbares Bindemittel mit den genannten Mitteln zum Vorbereiten einer vorkomprimierten Matte, wobei die genannte Matte eine erste Oberfläche, insbesondere eine untere Oberfläche in Bezug auf die Transportmittel, und eine gegenüberliegende, zweite Oberfläche, insbesondere eine obere Oberfläche in Bezug auf die Transportmittel, und eine erste Seitenkante und eine gegenüberliegende zweite Seitenkante sowie eine Höhendimension zwischen der ersten, insbesondere unteren, und der zweiten, insbesondere oberen, Oberfläche und eine Breitendimension zwischen der ersten und zweiten Seitenkante aufweist,
c) Transportieren der genannten vorkomprimierten Matte zur Schneidestation unter Verwendung der Transportmittel, wobei die Schneidestation mindestens eine Bandsäge mit einem Schneideblatt mit einem Zahnprofil umfasst,
wobei das Schneideblatt zwischen der ersten, insbesondere unteren, Oberfläche und der zweiten, insbesondere oberen, Oberfläche der Matte angeordnet ist oder angeordnet und angepasst ist, um zwischen der ersten, insbesondere unteren, Oberfläche und der zweiten, insbesondere oberen, Oberfläche der Matte angeordnet zu sein, und auch angeordnet und angepasst ist, um die vorkomprimierte Matte in eine erste, insbesondere obere, Teilbahn und eine zweite, insbesondere untere, Teilbahn zu spalten, indem das Schneideblatt in einer Sägerichtung relativ zur vorkomprimierten Matte bewegt wird,
d) Spalten der vorkomprimierten Matte in eine erste, insbesondere obere, Teilbahn und eine zweite, insbesondere untere, Teilbahn, unter Verwendung des Zahnprofils des beweglichen Schneideblattes,
e) Unterziehen der ersten, insbesondere oberen, Teilbahn und/oder der zweiten, insbesondere unteren, Teilbahn, bevorzugt der oberen Teilbahn, besonders bevorzugt der oberen Teilbahn und nicht der unteren Teilbahn, mindestens einem Kompressionsschritt in der Höhen- und/oder Breitendimension, insbesondere in der Höhendimension, insbesondere in der Höhendimension und nicht in der Breitendimension, so dass die obere und die untere Teilbahn zu abweichenden Dichten führen, insbesondere die erste, insbesondere obere Teilbahn, eine höhere Dichte aufweist als die zweite, insbesondere untere Teilbahn,
f) Verbinden der ersten, insbesondere oberen, Teilbahn und der zweiten, insbesondere unteren, Teilbahn und
g) Unterziehen der kombinierten ersten, insbesondere oberen, Teilbahn und der zweiten, insbesondere unteren, Teilbahn einem Aushärteschritt an der Aushärtestation, so dass die erste und zweite Teilbahn entlang ihrer angrenzenden Oberflächen miteinander verbunden werden, und
h) Isolieren von Mineralwollplatten, die zwei oder mehr Schichten umfassen, Dichten, die sich von den Dichten der ausgehärteten kombinierten ersten, insbesondere oberen, und zweiten, insbesondere unteren, Teilbahnen unterscheiden
wobei
das Zahnprofil des Schneideblattes eine Vielzahl von Zähnen umfasst, die, bezogen auf die Sägerichtung, eine nach vorne gerichtete Kante und eine nach hinten gerichtete Kante aufweisen, die im Wesentlichen jeweils einen Fersen- und einen Zehenteil aufweisen,
wobei der Winkel α zwischen der Geraden, die durch den Fersenteil und den Zehenteil der nach vorne gerichteten Kante eines Zahnes verläuft, und der Geraden, die durch den Fersenteil der nach vorne gerichteten Kante und den Fersenteil der nach hinten gerichteten Kante des Zahnes verläuft, kleiner ist als der Winkel β zwischen der Geraden, die durch den Fersenteil und den Zehenteil der nach hinten gerichteten Kante des Zahnes verläuft, und der Geraden, die durch den Fersenteil der nach hinten gerichteten Kante und den Fersenteil der nach vorne gerichteten Kante des Zahnes verläuft,
wobei die nach vorne gerichteten Kanten eine konvexe Form aufweisen und/oder die nach hinten gerichteten Kanten eine konkave Form aufweisen.

2. Verfahren nach Anspruch 1, wobei
das Zahnprofil ein Reißzahnprofil aufweist oder ein Reißzahnprofil umfasst und/oder wobei der Winkel α für die Mehrzahl der Zähne der Vielzahl von Zähnen, insbesondere für im Wesentlichen alle Zähne der Vielzahl von Zähnen, kleiner ist als der Winkel β.

3. Verfahren nach Anspruch 1 oder 2, wobei
der Winkel α im Bereich von 10 bis 55°, insbesondere im Bereich von 25 bis 45°, liegt und/oder wobei der Winkel β im Bereich von 60 bis 155°, insbesondere im Bereich von 90 bis 135°, liegt.

4. Verfahren nach einem der vorhergehenden Ansprüche, wobei
die Abmessung zwischen dem Zehen- und Fersenteil der nach vorne gerichteten Kante eines Zahnes, insbesondere im Wesentlichen aller Zähne der Vielzahl von Zähnen, länger ist als die zwischen dem Zehen- und Fersenteil der nach hinten gerichteten Kante des Zahnes.

5. Verfahren nach einem der vorhergehenden Ansprüche, wobei
die Fersenteile der nach vorne gerichteten Kanten der Zähne der Vielzahl von Zähnen auf einer im Wesentlichen geraden Grundlinie liegen, und/oder wobei
die Fersenteile der nach hinten gerichteten Kanten der Zähne der Vielzahl von Zähnen auf einer im Wesentlichen geraden Grundlinie liegen, und/oder wobei
die Fersenteile der vorderen und hinteren Zahnkanten der Zähne der Vielzahl von Zähnen auf einer im Wesentlichen geraden Grundlinie liegen,
und/oder wobei
der Fersenteil der nach vorne gerichteten Kante eines Zahnes der Vielzahl von Zähnen mit dem Fersenteil der nach hinten gerichteten Kante des Nachbarzahnes überlappt,
und/oder wobei
der Fersenteil der nach hinten gerichteten Kante des Zahnes mit dem Fersenteil der nach vorne gerichteten Kante des benachbarten Zahnes überlappt, und/oder wobei
der Zehenteil des nach vorne gerichteten Randes eines Zahnes der Vielzahl von Zähnen mit dem Zehenteil des nach hinten gerichteten Randes des Zahnes überlappt.

6. Verfahren nach einem der vorhergehenden Ansprüche, wobei
die zweite, insbesondere untere, Teilbahn nach dem Spalten nicht in Längsrichtung komprimiert, in Längsrichtung gedehnt und/oder in der Dicke komprimiert wird, insbesondere nicht in Längsrichtung komprimiert, in Längsrichtung gedehnt und in der Dicke komprimiert wird, und/oder wobei
die erste, insbesondere obere, und die zweite, insbesondere untere, Teilbahn nicht der gleichen Längskompression ausgesetzt ist,
und/oder wobei
die vorkomprimierte Matte einer Längskompression und/oder einem Verfahrensschritt unterzogen wird, bei dem die vorkomprimierte Matte so behandelt wird, dass zumindest einige, insbesondere ein Großteil der Mineralwollfasern vor dem Spaltschritt eine Neuorientierung erfahren.

7. Verfahren nach einem der vorhergehenden Ansprüche, wobei
die zweite, insbesondere untere, Teilbahn nach dem Spalteschritt und vor der Kombination mit der ersten, insbesondere oberen, Teilbahn keinem Behandlungsschritt unterzogen wird.

8. Verfahren nach einem der vorhergehenden Ansprüche, wobei
die erste, insbesondere obere, Teilbahn mindestens einem Dickenkompressionsschritt unterzogen wird, bevor sie mit der zweiten, insbesondere unteren, Teilbahn kombiniert wird, und/oder wobei
die erste, insbesondere obere, Teilbahn keiner Kompression in Längsrichtung unterworfen wird, die größer ist, als zum Ausgleich der Dickenkompression erforderlich ist, und/oder wobei die erste, insbesondere obere, Teilbahn keiner Dehnung in Längsrichtung unterworfen wird, bevor sie mit der zweiten, insbesondere unteren, Teilbahn kombiniert wird.

9. Verfahren nach einem der vorhergehenden Ansprüche, wobei
die vorkomprimierte Matte aus mindestens einer Mineralwollbahn gebildet wird, die in Schichten übereinander gelegt wird, insbesondere unter Verwendung eines Pendelwerkzeugs, wodurch eine Matte aus Mineralwolle gebildet wird, die in einer Vorkompressionseinheit dem Vorkompressionsschritt unterzogen wird, und/oder wobei
die vorkomprimierte Matte vor dem Spalteschritt mindestens einem Längskompressionsschritt und/oder mindestens einem Höhenkompressionsschritt unterzogen wird.

10. Verfahren nach einem der vorhergehenden Ansprüche, wobei
die vorkomprimierte Matte vor dem Spalteschritt d) mindestens einem Quetschschritt unterzogen wird.

11. Verfahren nach einem der vorhergehenden Ansprüche, wobei die kombinierte erste und zweite Teilbahn, insbesondere die obere und untere Teilbahn, mindestens einem Kompressionsschritt unterzogen werden, insbesondere während sie in der Härtungseinheit einem Wärmehärtungsschritt unterzogen werden.

12. Verfahren nach Anspruch 11, wobei
die erste Teilbahn, insbesondere die obere Teilbahn, komprimiert wird, indem sie durch eine Kompressionseinheit übertragen wird, die eine erste drehbare oder aktiv rotierende Walze, insbesondere einen Satz erster drehbarer oder aktiv rotierender Walzen, auf der ersten, insbesondere oberen, Seite der ersten, insbesondere oberen, Teilbahn und eine zweite drehbare oder aktiv rotierende Walze, insbesondere einen Satz zweiter drehbarer oder aktiv rotierender Walzen, auf der entgegengesetzten zweiten Seite der ersten, insbesondere oberen, Teilbahn umfasst, insbesondere Unterseite, der ersten, insbesondere oberen, Teilbahn, wobei die erste und die zweite Walze zueinander ausgerichtet, im Wesentlichen vertikal zueinander ausgerichtet sind, oder wobei mindestens eine Walze, insbesondere alle Walzen, des Satzes der ersten Walzen und mindestens eine Walze, insbesondere alle Walzen, des Satzes der zweiten Walzen paarweise zueinander ausgerichtet, insbesondere paarweise vertikal zueinander ausgerichtet sind.

13. Verfahren nach Anspruch 12, wobei
die erste aktiv rotierende Walze und die zweite aktiv rotierende Walze mit im Wesentlichen gleicher Geschwindigkeit rotieren, oder wobei mindestens eine aktiv rotierende Walze des Satzes erster Walzen und mindestens eine aktiv rotierende Walze des Satzes zweiter Walzen, die zueinander ausgerichtet sind, insbesondere im Wesentlichen vertikal zueinander ausgerichtet sind, mit im Wesentlichen gleicher Geschwindigkeit rotieren, oder wobei der Satz erster Walzen eine Vielzahl aktiv rotierender Walzen umfasst und der Satz zweiter Walzen eine Vielzahl aktiv rotierender Walzen umfasst, wobei bei mindestens einem Paar, insbesondere bei allen Paaren, der ausgerichteten, insbesondere im Wesentlichen vertikal ausgerichteten, aktiv rotierenden Walze aus dem ersten und zweiten Walzensatz diese Walzen mit der gleichen Geschwindigkeit rotieren.

14. Verfahren nach einem der vorhergehenden Ansprüche, insbesondere nach den Ansprüchen 11 bis 13, wobei
mindestens eine Markierung, insbesondere ein Band, vorgesehen ist, das beim Kompressionsschritt mit der oberen Teilbahn, insbesondere mit der Oberseite der oberen Teilbahn, verbunden wird, wobei die Markierung insbesondere ein Glasfaserband, Glasfasergewebe oder eine RFID-Vorrichtung oder ein Glasfaserband oder Glasfasergewebe mit einer RFID-Vorrichtung umfasst oder daraus besteht.

## Revendications

1. Procédé, en particulier continu, pour la fabrication de panneaux de laine minérale comprenant deux couches ou plus ayant différentes densités comprenant les étapes suivantes :
a) la fourniture d'une ligne de production de panneaux de laine minérale comprenant un moyen pour préparer un mat pré-comprimé comprenant des fibres de laine minérale, une station de coupe pour diviser le mat pré-comprimé en une première et une deuxième sous-bande, un moyen de transport agencé et adapté pour transférer le mat pré-comprimé vers la station de coupe, et une station de durcissement,
b) la fourniture d'un mat pré-comprimé comprenant des fibres de laine minérale et au moins un liant durcissable avec ledit moyen pour préparer un mat pré-comprimé, ledit mat ayant une première surface, en particulier surface inférieure par rapport au moyen de transport, et une deuxième surface opposée, en particulier surface supérieure par rapport au moyen de transport, et un premier bord latéral et un deuxième bord latéral opposé, et une dimension de hauteur entre la première surface, en particulier inférieure, et la deuxième surface, en particulier supérieure, et une dimension de largeur entre le premier et le deuxième bord latéral,
c) le transport dudit mat pré-comprimé vers la station de coupe en utilisant le moyen de transport, la station de coupe comprenant au moins une scie à bande munie d'une lame de coupe ayant un profilé denté,
la lame de coupe étant située ou étant agencée et adaptée pour être située entre la première surface, en particulier inférieure, et la deuxième surface, en particulier supérieure, du mat et étant également agencée et adaptée pour diviser le mat pré-comprimé en une première sous-bande, en particulier supérieure, et une deuxième sous-bande, en particulier inférieure, par déplacement de la lame de coupe dans une direction de sciage par rapport au mat pré-comprimé,
d) la division du mat pré-comprimé en une première sous-bande, en particulier supérieure, et une deuxième sous-bande, en particulier inférieure, en utilisant le profilé denté de la lame de coupe en déplacement,
e) la soumission de la première sous-bande, en particulier supérieure, et/ou de la deuxième sous-bande, en particulier inférieure, en particulier de la sous-bande supérieure, plus particulièrement de la sous-bande supérieure et non de la sous-bande inférieure, à au moins une étape de compression dans la dimension de hauteur et/ou de largeur, en particulier dans la dimension de hauteur, plus particulièrement dans la dimension de hauteur et non dans la dimension de largeur, de telle sorte que la sous-bande supérieure et inférieure présentent des densités différentes, en particulier que la première sous-bande, en particulier supérieure, ait une densité plus élevée que la deuxième sous-bande, en particulier inférieure,
f) l'assemblage de la première sous-bande, en particulier supérieure, et de la deuxième sous-bande, en particulier inférieure, et
g) la soumission de la première sous-bande, en particulier supérieure, et de la deuxième sous-bande, en particulier inférieure, combinées à une étape de durcissement au niveau de la station de durcissement de telle sorte que les première et deuxième sous-bandes soient reliées l'une à l'autre le long de leurs surfaces voisines, et
h) l'isolement de panneaux de laine minérale comprenant deux couches ou plus ayant différentes densités à partir de la première sous-bande, en particulier supérieure, et de la deuxième sous-bande, en particulier inférieure, combinées durcies,
dans lequel
le profilé denté de la lame de coupe comprend une multitude de dents ayant, par rapport à la direction de sciage, un bord dirigé vers l'avant et un bord dirigé vers l'arrière essentiellement chacun avec une partie de talon et de pointe,
l'angle α entre la ligne droite traversant la partie de talon et la partie de pointe du bord dirigé vers l'avant d'une dent et la ligne droite traversant ladite partie de talon du bord dirigé vers l'avant et la partie de talon du bord dirigé vers l'arrière de ladite dent étant inférieur à l'angle β entre la ligne droite traversant la partie de talon et la partie de pointe du bord dirigé vers l'arrière de ladite dent et la ligne droite traversant la partie de talon du bord dirigé vers l'arrière et la partie de talon du bord dirigé vers l'avant de ladite dent,
dans lequel les bords dirigés vers l'avant ont une forme convexe et/ou les bords dirigés vers l'arrière ont une forme concave.

2. Procédé selon la revendication 1, dans lequel
le profilé denté comprend ou consiste en un profilé en denture de perroquet et/ou dans lequel l'angle α est inférieur à l'angle β pour la majorité des dents de la multitude de dents, en particulier pour essentiellement toutes les dents de la multitude de dents.

3. Procédé selon la revendication 1 ou 2, dans lequel
l'angle α est dans la plage allant de 10 à 55°, en particulier dans la plage allant de 25 à 45°, et/ou dans lequel l'angle β est dans la plage allant de 60 à 155°, en particulier dans la plage allant de 90 à 135°.

4. Procédé selon l'une quelconque des revendications précédentes, dans lequel
la dimension entre la partie de pointe et de talon du bord dirigé vers l'avant d'une dent, en particulier d'essentiellement toutes les dents de la multitude de dents, est plus longue qu'entre la partie de pointe et de talon du bord dirigé vers l'arrière de ladite dent.

5. Procédé selon l'une quelconque des revendications précédentes, dans lequel
les parties de talon des bords dirigés vers l'avant des dents de la multitude de dents reposent sur une ligne de base essentiellement droite et/ou dans lequel
les parties de talon des bords dirigés vers l'arrière des dents de la multitude de dents reposent sur une ligne de base essentiellement droite et/ou dans lequel
les parties de talon des bords dirigés vers l'avant et vers l'arrière des dents de la multitude de dents reposent sur une ligne de base essentiellement droite,
et/ou dans lequel
la partie de talon du bord dirigé vers l'avant d'une dent de la multitude de dents chevauche la partie de talon du bord dirigé vers l'arrière de la dent adjacente,
et/ou dans lequel
la partie de talon du bord dirigé vers l'arrière de ladite dent chevauche la partie de talon du bord dirigé vers l'avant de la dent adjacente, et/ou dans lequel
la partie de pointe du bord dirigé vers l'avant d'une dent de la multitude de dents chevauche la partie de pointe du bord dirigé vers l'arrière de ladite dent.

6. Procédé selon l'une quelconque des revendications précédentes, dans lequel
la deuxième sous-bande, en particulier inférieure, après que la division ait eu lieu, n'est pas soumise à une compression longitudinale, à un étirement longitudinal et/ou à une compression en épaisseur, en particulier n'est pas soumise à une compression longitudinale, à un étirement longitudinal et à une compression en épaisseur, et/ou dans lequel
la première sous-bande, en particulier supérieure, et la deuxième sous-bande, en particulier inférieure, ne sont pas soumises à la même compression longitudinale, et/ou dans lequel
le mat pré-comprimé est soumis à une compression longitudinale et/ou à une étape de procédé dans laquelle le mat pré-comprimé est traité de telle sorte qu'au moins une partie, en particulier une majorité, des fibres de laine minérale subissent une réorientation avant l'étape de division.

7. Procédé selon l'une quelconque des revendications précédentes, dans lequel
la deuxième sous-bande, en particulier inférieure, après l'étape de division et avant d'être combinée avec la première sous-bande, en particulier supérieure, n'est pas soumise à une quelconque étape de traitement.

8. Procédé selon l'une quelconque des revendications précédentes, dans lequel
la première sous-bande, en particulier supérieure, est soumise à au moins une étape de compression en épaisseur avant d'être combinée avec la deuxième sous-bande, en particulier inférieure, et/ou dans lequel
la première sous-bande, en particulier supérieure, n'est pas soumise à une compression longitudinale plus importante que nécessaire pour compenser la compression en épaisseur, et/ou dans lequel la première sous-bande, en particulier supérieure, n'est pas soumise à un étirement longitudinal avant d'être combinée avec la deuxième sous-bande, en particulier inférieure.

9. Procédé selon l'une quelconque des revendications précédentes, dans lequel
le mat pré-comprimé est formé à partir d'au moins une bande de laine minérale qui sont placées en couches les unes sur les autres, en particulier en utilisant un outil à pendule, ce qui permet de former un mat de laine minéral qui est soumis à l'étape de pré-compression dans une unité de pré-compression, et/ou dans lequel
le mat pré-comprimé est soumis à au moins une étape de compression en longueur et/ou au moins une étape de compression en hauteur avant l'étape de division.

10. Procédé selon l'une quelconque des revendications précédentes, dans lequel
le mat pré-comprimé est soumis à au moins une étape de sertissage avant l'étape de division d).

11. Procédé selon l'une quelconque des revendications précédentes, dans lequel
les première et deuxième sous-bandes combinées, en particulier sous-bandes supérieure et inférieure, sont soumises à au moins une étape de compression, en particulier pendant qu'elles sont soumises à une étape de durcissement à la chaleur dans l'unité de durcissement.

12. Procédé selon la revendication 11, dans lequel
la première sous-bande, en particulier sous-bande supérieure, est comprimée en étant transférée au travers d'une unité de compression comprenant un premier rouleau pouvant tourner ou tournant activement, en particulier un ensemble de premiers rouleaux pouvant tourner ou tournant activement, sur le premier côté, en particulier supérieur, de la première sous-bande, en particulier supérieure, et un deuxième rouleau pouvant tourner ou tournant activement, en particulier un ensemble de deuxièmes rouleaux pouvant tourner ou tournant activement, sur le deuxième côté opposé, en particulier inférieur, de la première sous-bande, en particulier supérieure, le premier et le deuxième rouleau étant alignés l'un avec l'autre, essentiellement alignés verticalement l'un avec l'autre, ou au moins un rouleau, en particulier tous les rouleaux, de l'ensemble de premiers rouleaux et au moins un rouleau, en particulier tous les rouleaux, de l'ensemble de deuxième rouleaux, étant alignés les uns avec les autres d'une manière appariée, en particulier alignés verticalement les uns avec les autres d'une manière appariée.

13. Procédé selon la revendication 12, dans lequel
le premier rouleau tournant activement et le deuxième rouleau tournant activement tournent avec essentiellement la même vitesse, ou dans lequel
au moins un rouleau tournant activement de l'ensemble de premiers rouleaux et au moins un rouleau tournant activement de l'ensemble de deuxièmes rouleaux, qui sont alignés les uns avec les autres, en particulier essentiellement alignés verticalement les uns avec les autres, tournent avec essentiellement la même vitesse, ou dans lequel l'ensemble de premiers rouleaux comprend une multitude de rouleaux tournant activement et l'ensemble de deuxièmes rouleaux comprend une multitude de rouleaux tournant activement, au moins une paire, en particulier toutes les paires, des rouleaux tournant activement alignés, en particulier essentiellement alignés verticalement, du premier et du deuxième ensemble de rouleaux tournant avec la même vitesse.

14. Procédé selon l'une quelconque des revendications précédentes, en particulier des revendications 11 à 13, dans lequel
au moins un marqueur, en particulier un ruban, est fourni, qui est relié à la sous-bande supérieure, en particulier à la surface supérieure de ladite sous-bande supérieure, pendant l'étape de compression, le marqueur en particulier comprenant ou consistant en un ruban en fibres de verre, un tissu en fibres de verre ou un dispositif RFID ou un ruban en fibres de verre ou un tissu en fibres de verre comprenant un dispositif RFID.
